Europäisches Patentamt

European Patent Office

Office européen des brevets

(11) Veröffentlichungsnummer: **0 226 087 B1**

# (12) EUROPÄISCHE PATENTSCHRIFT

(45) Veröffentlichungstag der Patentschrift: **20.02.91**　　(51) Int. Cl.5: **H02P 7/38**

(21) Anmeldenummer: **86116411.9**

(22) Anmeldetag: **26.11.86**

(54) Drehstrommotor.

(30) Priorität: **12.12.85 DE 3543800**

(43) Veröffentlichungstag der Anmeldung:
**24.06.87 Patentblatt 87/26**

(45) Bekanntmachung des Hinweises auf die
Patenterteilung:
**20.02.91 Patentblatt 91/08**

(84) Benannte Vertragsstaaten:
**AT BE CH DE ES FR GB GR IT LI NL SE**

(56) Entgegenhaltungen:
**DE-A- 2 700 116**
**DE-B- 185 468**
**FR-A- 2 304 208**

(73) Patentinhaber: **WILO-Werk GmbH & Co.**
**Pumpen- und Apparatebau**
**Nortkirchenstrasse 100**
**D-4600 Dortmund 30(DE)**

(72) Erfinder: **Naasner, Günter, Dipl.-Ing.**
**Margeritenstrasse 40**
**D-4152 Kempen 1(DE)**
Erfinder: **Kech, Hans-Jürgen, Dipl.-Ing.**
**Hermann-Oerth-Strasse 6**
**D-5804 Herdecke(DE)**

(74) Vertreter: **Cohausz & Florack Patentanwälte**
**Postfach 14 01 61 Schumannstrasse 97**
**D-4000 Düsseldorf 1(DE)**

**Beschreibung**

Die Erfindung betrifft einen Drehstrommotor mit einem in verschiedenen Stellungen umsteckbaren Stecker, durch die unterschiedliche Drehzahlen erzeugbar sind.

Es ist bekannt, einen für eine Spannung ausgelegten Drehstrommotor durch einen in mindestens zwei Stellungen am Motorenklemmenkasten ansteckbaren Stecker in verschiedenen Drehzahlstufen arbeiten zu lassen. Außerdem sind Drehstrommotoren bekannt, die nur eine Festdrehzahl besitzen. Soll ein solcher Drehstrommotor an eine unterschiedliche, insbesondere höhere Spannung angeschlossen werden, so ist es erforderlich, durch Umlegen von Brücken in Klemmkasten den Motor anzupassen.

Aufgabe der Erfindung ist es, einen Drehstrommotor der eingangs genannten Art zu schaffen, der auf einfache Weise und bei kleinstem Zeitaufwand für eine unterschiedliche insbesondere höhere Spannung anpassbar ist.

Diese Aufgabe wird erfindungsgemäß dadurch gelöst, daß der Drehstrommotor nur eine Anschlußstelle für einen Stecker aufweist, daß für einen Betrieb an einer zweiten Netzspannung ein zweiter Stecker vorgesehen ist, der anstelle des ersten Steckers an derselben Anschlußstelle befestigbar ist und eine Schaltung aufweist, die von der Schaltung des ersten Steckers unterschiedlich ist. Ein solcher Drehstrommotor weist bereits eine Anschlußstelle für einen Stecker auf, so daß der für die Drehzahlveränderung verwendete Stecker nur abgenommen zu werden braucht um einen Stecker aufzusetzen, der den Motor an eine unterschiedliche Spannung anpaßt. Dies ist bei geringstem Zeitaufwand auch durch einen Nichtfachmann durchführbar. Der Motor kann hierdurch sowohl in einer ersten Spannung mit unterschiedlichsten Drehzahlen gefahren werden und ferner ist er auf einfache Weise auf eine zweite Spannung umstellbar.

Besonders vorteilhaft ist es, wenn eine Spannungsumschaltung während des Betriebes dadurch verhindert wird, daß der Stecker durch den Klemmkastendeckel des Motors verriegelt ist. Es ist erforderlich, daß der Stecker gegen Umschalten während des Betriebes auf eine andere Netzspannung gesichert ist; er wird daher auf einfache Weise mit dem Klemmenkasten verriegelt. Vorzugsweise wird vorgeschlagen, daß die zwei unterschiedlichen Spannungen auf dem Stecker angegeben sind, so daß eine Falschhandhabung nicht geschehen kann. Vorzugsweise wird vorgeschlagen, daß der Stecker für den Motor wahlweise eine Stern- oder Dreieckschaltung erzeugt. Durch eine Dreieckschaltung wird der Motor an eine niedrigere Spannung und durch eine Sternschaltung an einer höheren Spannung als die ursprüngliche angeschlossen. Deshalb wird auch vorgeschlagen, daß er ein Drehstrommotor ist, der durch den zweiten Stecker einen Anschluß an eine um $\sqrt{3}$ höhere Spannung ermöglicht.

Ein Ausführungsbeispiel der Erfindung wird im folgenden näher beschrieben.

Ein Drehstrommotor mit einer Dreieckschaltung ist an eine Spannung von 3 x 220 V anschließbar. Am Klemmenkasten des Motors ist eine Anschlußbuchse angeformt, auf der ein Vier-Stufen-Stecker einsteckbar ist. Dieser erste Stecker erzeugt vier unterschiedliche Drehzahlen bzw. Leistungen des Motors, je nach dem in welcher Stellung und/oder mit welcher Seite der Stecker am Klemmenkasten befestigt ist. Je nach Stellung sind unterschiedliche Stifte des Steckers eingesteckt und werden über die im Stecker befindliche Schaltungen mit den Motorwicklungen verbunden.

Statt dieses ersten Steckers kann ein zweiter Stecker an dieselbe Buchse angeschlossen werden, dessen innere Schaltung eine Sternschaltung oder Dreieckschaltung erzeugt. Mit der Sternschaltung ist der Motor an ein Netz 3 x 380 V und mit der Dreieckschaltung an 3 x 220 V oder 1 x 220 V in Steinmetzschaltung anschließbar. Der Motor erzeugt damit im Drehstrombetrieb nach Wechsel des ersten Steckers gegen den zweiten die gleiche Leistung bei Anschluß an eine höhere Spannung oder bei gleichbleibender Spannung; je nach Stellung des Spannungswahlsteckers. Wie bekannt ergibt der Steinmetzbetrieb eine Leistungsminderung um max. 30 % von der Nennleistung.

**Ansprüche**

1. Drehstrommotor mit einem in verschiedenen Stellungen umsteckbaren Stecker, durch die unterschiedliche Drehzahlen erzeugbar sind, **dadurch gekennzeichnet**, daß der Drehstrommotor nur eine Anschlußstelle für einen Stecker aufweist, daß für einen Betrieb an einer zweiten Netzspannung ein zweiter Stecker vorgesehen ist, der anstelle des ersten Steckers an derselben Anschlußstelle befestigbar ist und eine Schaltung aufweist, die von der Schaltung des ersten Steckers unterschiedlich ist.

2. Drehstrommotor nach Anspruch 1, **dadurch gekennzeichnet**, daß eine Spannungsumschaltung während des Betriebes dadurch verhindert wird, daß der Stecker durch den Klemmkastendeckel des Motors oder durch eine Schraube oder durch eine Überdeckung des Klemmenkastens verriegelt ist.

3. Drehstrommotor nach Anspruch 1 oder 2, **dadurch gekennzeichnet**, daß die zwei unterschiedlichen Spannungen auf dem Stecker angegeben und ablesbar sind.

4. Drehstrommotor nach einem der vorherigen Ansprüche, **dadurch gekennzeichnet**, daß der Stecker für den Motor wahlweise eine Stern- oder Dreieckschaltung erzeugt.

5. Drehstrommotor nach einem der vorherigen Ansprüche, **dadurch gekennzeichnet**, daß er ein Drehstrommotor ist, der mit dem zweiten Stecker einen Anschluß an eine um $\sqrt{3}$ höhere Spannung ermöglicht.

## Claims

1. A three-phase motor having a connector which can be inserted in various positions to produce different speeds, characterized in that the three-phase motor has only one connection place for a connector, and for operation at a second mains voltage a second connector is provided which can be attached instead of the first connector to the same connection place and has a wiring which differs from the wiring of the first connector.

2. A three-phase motor according to claim 1, characterized in that a change of voltage during operation is prevented by the connector being locked by the motor terminal box cover or by a screw or by a covering of the terminal box.

3. A three-phase motor according to claims 1 or 2, characterized in that the two different voltages are stated on and can be read off the connector.

4. A three-phase motor according to one of the preceding claims, characterized in that the connector for the motor optionally produces a star or delta connection.

5. A three-phase motor according to one of the preceding claims, characterized in that it is a three-phase motor which can via the second connector be connected to a $\sqrt{3}$ higher voltage.

1. Moteur triphasé à connecteur montable en diverses positions par lesquelles on peut obtenir des vitesses de rotation différentes, caractérisé en ce que le moteur triphasé ne présente qu'un seul point de prise pour un connecteur, qu'un second connecteur est prévu pour une exploitation sur une seconde tension de réseau, qui peut être fixé à la place du premier connecteur au même point de prise et présente un câblage qui est différent du câblage du premier connecteur.

2. Moteur triphasé selon la revendication 1, caractérisé en ce qu'une commutation de tension est empêchée pendant l'exploitation grâce au fait que le connecteur est verrouillé par le couvercle de la boîte à bornes du moteur ou par une vis ou par un recouvrement de la boîte à bornes.

3. Moteur triphasé selon la revendication 1 ou 2, caractérisé en ce que les deux tensions différentes sont signalées et lisibles sur le connecteur.

4. Moteur triphasé selon l'une des revendications précédentes, caractérisé en ce que le connecteur pour le moteur présente facultativement un cablâge étoile ou triangle.

5. Moteur triphasé selon l'une des revendications précédentes, caractérisé en ce qu'il s'agit d'un moteur triphasé qui permet, avec le second connecteur, le raccordement à une tension plus élevé de $\sqrt{3}$.

## Revendications